# EUROPEAN PATENT SPECIFICATION

(11) **EP 4 472 133 B1**
(45) Date of publication and mention of the grant of the patent: **29.07.2026**
(21) Application number: 23769852.7
(22) Date of filing: 16.03.2023
(51) Int. Cl.: H04L 9/40, H04L 9/06, H04L 9/32, H04L 9/08

(54) **IDENTITY AUTHENTICATION METHOD, APPARATUS AND DEVICE, AND STORAGE MEDIUM**
IDENTITÄTSAUTHENTIFIZIERUNGSVERFAHREN, -VORRICHTUNG UND -VORRICHTUNG SOWIE SPEICHERMEDIUM
PROCÉDÉ, APPAREIL ET DISPOSITIF D'AUTHENTIFICATION D'IDENTITÉ ET SUPPORT DE STOCKAGE

(30) Priority: 17.03.2022 CN 202210265408
(43) Date of publication of application: 04.12.2024
(73) Proprietor: CHINA MOBILE COMMUNICATIONS GROUP CO., LTD., Beijing 100032 (CN)
(72) Inventor: ZHANG, Feng, Beijing 100032 (CN); YU, Le, Beijing 100032 (CN); QIU, Qin, Beijing 100032 (CN); MA, Yusheng, Beijing 100032 (CN); LI, Fei, Beijing 100032 (CN)
(74) Representative: Hertin und Partner Rechts- und Patentanwälte PartG mbB
(86) International application number: PCT/CN2023/081762
(87) International publication number: WO 2023/174350

(56) References cited:
- CN-A- 104 618 116
- CN-A- 106 685 651
- CN-A- 107 438 005
- CN-A- 111 200 502
- CN-A- 112 651 036
- CN-A- 112 651 036
- CN-A- 112 906 039
- CN-A- 115 378 623
- US-A1- 2020 153 627
- US-A1- 2021 036 841

## Description

### TECHNICAL FIELD

The present disclosure relates to the field of information security, in particular to an identity authentication method, device and a storage medium

### BACKGROUND

With the development of the information era and the intelligent terminal technology, currently many services for a user have been migrated to intelligent terminals, especially mobile phones. The more the services, the more sensitive the data on the intelligent terminal is. The cryptographic-key leakage poses the biggest threat. With more and more cryptographic technologies are being applied to portable and unprotected mobile devices, key leakage is inevitable. The key security is confidential, and there is an urgent need to prevent the loss caused by the key leakage. The key leakage is a serious security issue. No matter how sophisticated the design of a cryptosystem is, all cryptographic operations related to the cryptographic-key are no longer safe once the key is leaked.

In order to address the key leakage problem, on the basis of a principle of key evolution and in consideration of forward security and backward security, an identity authentication-based method allows two or more participants to perform cross verification through public information, so as to provide security authentication for the subsequent communication. A public key of a user may be computed from readable identity information of the user, and a private key of the user is computed based on the identity information of the user and a dedicated security device. In this way, it is able to improve the computation efficiency, the communication efficiency and the security.

In the existing technologies, a mobile user and the intelligent terminal need to perform information interaction with a server to achieve the identity authentication. However, there exists a potential security risk in the remote authentication on an open channel. In addition, the existing authentication techniques require such steps as applying for, inquiring, verifying and exchanging the public key, so the deployment thereof is complicated and the efficiency is relatively low. CN112651036A1 discloses an identity authentication method based on collaborative signature and computer readable storage medium.

The above contents are merely used to help to understand the technical solutions of the present disclosure, but shall not be construed as the related art.

### SUMMARY

An object of the present disclosure is to provide an identity authentication method, device and a storage medium as defined in the appended claims, so as to solve the problem in the conventional identity authentication process that there is risk of key leakage, and the authentication efficiency is low.

To achieve the object, the present disclosure provides an identity authentication method including: performing collaborative signature identity authentication with a collaborative signature server in accordance with an intelligent terminal identity; obtaining a partial signature from the collaborative signature server when the collaborative signature identity authentication succeeds; generating a full signature in accordance with the partial signature; and performing joint signature identity authentication with an application service in accordance with the full signature.

Optionally, the performing the collaborative signature identity authentication with the collaborative signature server in accordance with the intelligent terminal identity includes: transmitting the intelligent terminal identity to an identity management system; transmitting, by the identity management system, a key request to the collaborative signature server in accordance with the intelligent terminal identity; receiving a key fragment sent by the collaborative signature server in response to the key request; and performing the collaborative signature identity authentication with the collaborative signature server in accordance with the key fragment.

Optionally, the performing the collaborative signature identity authentication with the collaborative signature server in accordance with the key fragment includes: generating a signature fragment corresponding to the key fragment by loading the key fragment; transmitting a collaborative signature request to the collaborative signature server in accordance with the signature fragment; and performing, by the collaborative signature server, legitimacy verification on the collaborative signature request.

Optionally, the obtaining the partial signature from the collaborative signature server when the collaborative signature identity authentication succeeds includes: forwarding, by the collaborative signature server, the collaborative signature request to an identity cipher machine; generating, by the identity cipher machine, the partial signature in accordance with the collaborative signature request; and returning, by the collaborative signature server, the partial signature.

Optionally, the performing the joint signature identity authentication with the application service in accordance with the full signature includes: transmitting an authentication request to the application service; receiving a challenge code sent by the application service in response to the authentication request; generating response data in accordance with a local key fragment and the challenge code, and transmitting the response data to the application service; and performing, by the application service, legitimacy verification on the response data.

Optionally, prior to performing the collaborative signature identity authentication with the collaborative signature server in accordance with the intelligent terminal identity, the identity authentication method further includes performing identity synchronization between the identity management system and the application service, wherein the collaborative signature identity authentication with the collaborative signature server in accordance with the intelligent terminal identity is performed after the identity synchronization between the identity management system and the application service is completed.

Optionally, the performing the identity synchronization between the identity management system and the application service includes: generating, by the identity cipher machine, a master key, system parameters and an identity key component; and performing the identity synchronization between the identity management system and the application service through a preset algorithm in accordance with the master key, the system parameters and the identity key component.

In another aspect, the present disclosure provides an identity authentication apparatus including: an authentication module configured to perform collaborative signature identity authentication with a collaborative signature server in accordance with an intelligent terminal identity; a reception module configured to obtain a partial signature from the collaborative signature server when the collaborative signature identity authentication succeeds; and a generation module configured to generate a full signature in accordance with the partial signature. The authentication module is further configured to perform joint signature identity authentication with an application service in accordance with the full signature.

In yet another aspect, the present disclosure provides an identity authentication device, including a memory, a processor, and an identity authentication program stored in the memory and executed by the processor. The identity authentication program is configured to implement the above-mentioned identity authentication method.

In still another aspect, the present disclosure provides a storage medium storing therein an identity authentication program. The identity authentication program, when being executed by a processor, implements the above-mentioned identity authentication method.

According to the embodiments of the present disclosure, the collaborative signature identity authentication is performed with the collaborative signature server in accordance with the intelligent terminal identity, the partial signature is obtained from the collaborative signature server when the collaborative signature identity authentication succeeds, the full signature is generated in accordance with the partial signature, and the joint signature identity authentication is performed with the application service in accordance with the full signature. Steps of applying for, inquiring, verifying and exchanging a public key are omitted, and it is unnecessary to publishing and inquire the public key, so it is able to improve the authentication efficiency. In addition, through the collaborative signature authentication and the joint signature authentication, it is able to ensure the key insulation security.

### BRIEF DESCRIPTION OF THE DRAWINGS

Fig. 1 is a schematic structural view of an identity authentication device as a hardware operating environment related to the technical solutions of embodiments of the present disclosure;
Fig. 2 is a flow chart of an identity authentication method according to a first embodiment of the present disclosure;
Fig. 3 is a schematic view of an identity authentication architecture according to an embodiment of the identity authentication method of the present disclosure;
Fig. 4 is a schematic view of an identity authentication procedure according to an embodiment of the identity authentication method of the present disclosure;
Fig. 5 is a flow chart of an identity authentication method according to a second embodiment of the present disclosure;
Fig. 6 is a flow chart of an identity authentication method according to a third embodiment of the present disclosure; and
Fig. 7 is a block diagram of an identity authentication apparatus according to an embodiment of the present disclosure.

The objects, the features and the advantages of the present disclosure will be described in conjunction with the embodiments and drawings.

### DETAILED DESCRIPTION

It should be appreciated that, the following embodiments are for illustrative purposes only, and shall not be used to limit the scope of the present disclosure.

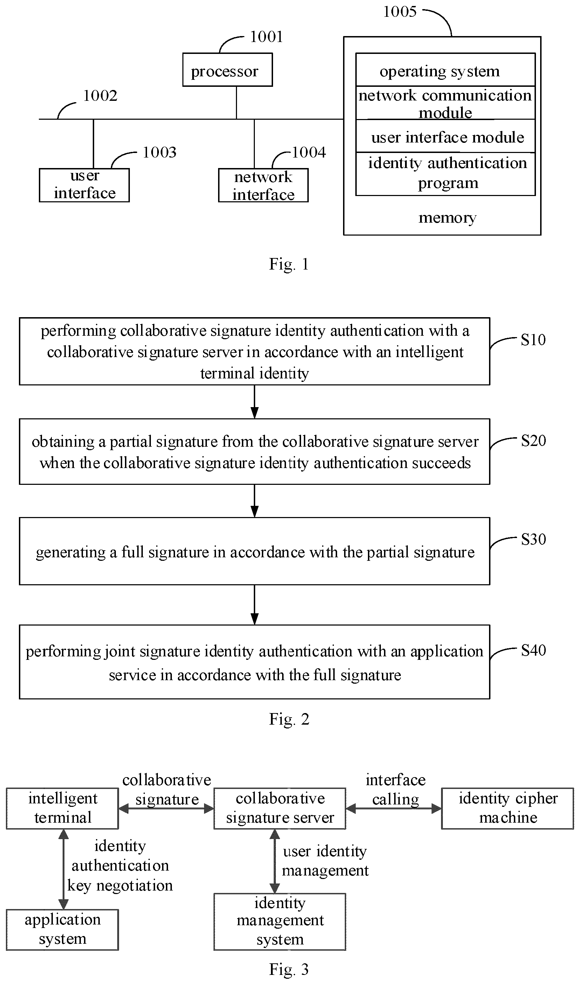

Fig. 1 shows a schematic structural view of an identity authentication device as a hardware operating environment related to the technical solutions of embodiments of the present disclosure.

As shown in Fig. 1, the identity authentication device includes: a processor 1001 (e.g., a central processing unit (CPU)), a communication bus 1002, a user interface 1003, a network interface 1004, and a memory 1005. The communication bus 1002 is used to achieve connection and communication among the components. The user interface 1003 may include a display and an input unit, e.g., a keyboard. Optionally, the user interface 1003 further includes a standard wired interface and a standard wireless interface. The network interface 1004 includes a standard wired interface, and a standard wireless interface (e.g., a wireless-fidelity (Wi-Fi) interface). The memory 1005 may be a high-speed random access memory (RAM), or a stable non-volatile memory (NVM), e.g., a magnetic disk memory. Optionally, the memory 1005 may also be any storage unit independent of the processor 1001.

It should be appreciated that, the structure shown in Fig. 1 shall not be construed as limiting the identity authentication device. The identity authentication device may include more or fewer components, or some components may be combined, or the components may be arranged in different modes.

As shown in Fig. 1, the memory 1005, as a storage medium, stores therein an operating system, a network communication module, a user interface module and an identity authentication program.

In the identity authentication device shown in Fig. 1, the network interface 1004 is mainly configured to perform data communication with a network server, and the user interface 1003 is mainly configured to perform data interaction with a user. The processor 1001 and the memory 1005 may be arranged in the identity authentication device, and the identity authentication program stored in the memory 1005 is called by the processor 1001 so as to implement an identity authentication method according to the embodiments of the present disclosure.

The present disclosure provides in some embodiments an identity authentication method. Fig. 2 is a flow chart of an identity authentication method according to a first embodiment of the present disclosure.

In the first embodiment of the present disclosure, the identity authentication method includes the following steps S10, S20, S30 and S40.

Step S10: performing collaborative signature identity authentication with a collaborative signature server in accordance with an intelligent terminal identity.

In the embodiment of the present disclosure, the method may be executed by an identity authentication device, e.g., an electronic device such as a personal computer or a server, or any other terminal device having a same or similar function, which will not be particularly limited herein. In this and the following embodiments of the present disclosure, the identity authentication method will be described by taking the identity authentication device as an example.

It should be appreciated that, currently many services for a user have been migrated to an intelligent terminal, especially a mobile phone. The more the services, the more sensitive the data on the intelligent terminal is. The key leakage becomes the biggest threat. With more and more cryptographic technologies are being applied to portable and unprotected mobile devices, the key leakage is inevitable. The key security is confidential, and there is an urgent need to prevent the loss caused by the key leakage. The key leakage is a serious security issue. No matter how sophisticated the design of a cryptosystem is, all cryptographic operations related to the cryptographic-key are no longer safe once the key is leaked.

Currently, in order to prevent the key leakage during the identity authentication, on the basis of a principle of key evolution and in consideration of forward security and backward security, an identity authentication-based method allows two or more participants to perform cross verification through public information, so as to provide security authentication for the subsequent communication. A public key of a user may be computed from readable identity information of the user, and a private key of the user is computed based on the identity information of the user and a dedicated security device. In this way, it is able to improve the computation efficiency, the communication efficiency and the security. In a conventional mode where the mobile user and the intelligent terminal perform information interaction with a server to achieve the identity authentication, there still exists a potential risk of key leakage. In addition, the identity authentication needs to include such steps as applying for, inquiring, verifying and exchanging the public key, so the authentication efficiency is relatively low.

In order to solve these problems, an entire identity authentication signature procedure needs to include initialization, generation of the key, updating, signing and verification so as to determine that the key insulation is safe, which will be described hereinafter.

In a specific implementation, firstly the collaborative signature identity authentication needs to be performed with the collaborative signature server. The collaborative signature identity authentication is the first identity authentication, and it refers to legitimacy verification performed by the collaborative signature server on a request for a collaborative signature.

It should be appreciated that, the identity authentication procedure according to this embodiment of the present disclosure relates to a plurality of devices or systems. The composition structure of devices involved in the entire identity authentication procedure is described with reference to Fig. 3. As shown in Fig. 3, these devices include an intelligent terminal, a collaborative signature server, an identity cipher machine and an identity management system. The intelligent terminal performs identity verification and key negotiation with an application system, so as to finally complete the identity authentication with the application system, thereby to enable the user to use the application system normally.

Further, the intelligent terminal is used for login authentication of the mobile user as well as data security protection, so as to prevent the occurrence of fake identity and data leakage. A software cryptographic module is integrated to store and manage a key. The collaborative signature server is configured to cooperate with the software cryptographic module on the mobile terminal end to complete a digital signature computation, i.e., the user is able to achieve the key security, the algorithm security and the identity authentication and ensure the data security and integrity without using any additional hardware device. The identity cipher machine is configured to support the generation and management of the key, support the generation of a master private key and system parameters of an identity key system, and provide such functions as importing, exporting, backing up and restoring the key. The identity management system is configured to perform security management on identity document and attribute information of an identity-based cryptographic user, distribute an identity private key securely, and provide flexible interface services for a service application system. Usually, the identity management system is used in conjunction with the identity cipher machine.

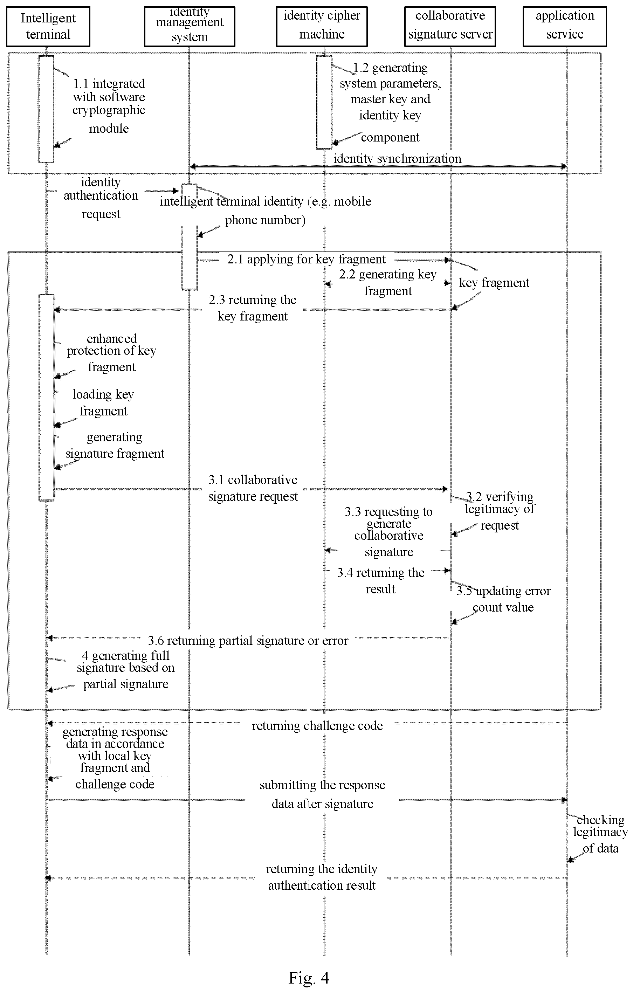

The entire identity authentication procedure will be further described with reference to Fig. 4. As shown in Fig. 4, the identity management system requests for the identity authentication in accordance with the intelligent terminal identity, and performs the collaborative signature operation.

The identity management system applies to the collaborative signature server for a key fragment. It should be stressed that, when an identity-based cryptographic asymmetric key is generated, a private key share (also called as private key fragment or private key component) is generated independently by each of two participants, then auxiliary data is transmitted between the two participants through interactive communication, and then one of the participants generates an identity public key in accordance with the auxiliary data. The collaborative signature server returns the key fragment to the intelligent terminal. After the key fragment is loaded to the intelligent terminal, the intelligent terminal generates a signature fragment, and initiates a collaborative signature request to the collaborative signature server. The collaborative signature server verifies collaborative signature legitimacy, and requests the identity cipher machine to generate a collaborative signature. When the collaborative signature legitimacy is verified successfully, the identity cipher machine returns a collaborative signature result. When the collaborative signature legitimacy is verified unsuccessfully, the collaborative signature server updates an error count value. The intelligent terminal generates a full signature in accordance with a partial signature, meanwhile sends an authentication request to cause the application service to return a challenge code, and then performs joint signature on the challenge code using a local private key fragment, i.e., the key fragment returned by the collaborative signature server, so as to generate response data. Finally, the intelligent terminal transmits the response data to the application service. The application service verifies the legitimacy of the response data using a standard signature verification method. If the legitimacy of the response data is verified successfully, the identity authentication succeeds, and if not, the identity authentication is to be performed again.

In a specific implementation, the identity authentication is performed in accordance with an identity authentication command or an identity authentication request inputted by the user, or performed automatically upon a predetermined time is reached. The predetermined time may be set according to the practical need. In addition, the identity authentication may also be performed in other ways, which will not be particularly limited herein.

Step S20: obtaining a partial signature from the collaborative signature server when the collaborative signature identity authentication succeeds.

It should be appreciated that, the collaborative signature identity authentication is equivalent to the first identity authentication. When the current authentication has been performed successfully, i.e., when the collaborative signature identity authentication has been performed successfully, the subsequent authentication may be performed. For the subsequent authentication, joint signature authentication needs to be performed in accordance with the signature, so in this embodiment of the present disclosure, the partial signature is returned by the collaborative signature server. The collaborative signature server directly transmits the partial signature to the intelligent terminal.

Step S30: generating a full signature in accordance with the partial signature.

In a specific implementation, upon the receipt of the partial signature, the full signature is generated in accordance with the partial signature. To be specific, a signature completing may be performed based on the partial signature in accordance with a format of the full signature, so as to obtain the full signature. Of course, depending on the actual need, the full signature may also be generated in other ways, which will not be particularly limited herein.

Step S40: performing joint signature identity authentication with an application service in accordance with the full signature.

In a specific implementation, after the generation of the full signature, the joint signature identity authentication is performed with the application service in accordance with the full signature. The joint signature identity authentication is the second identity authentication, and a successful joint signature identity authentication means that the identity authentication of the user succeeds.

According to the embodiments of the present disclosure, the collaborative signature identity authentication is performed with the collaborative signature server in accordance with the intelligent terminal identity, the partial signature is obtained from the collaborative signature server when the collaborative signature identity authentication succeeds, the full signature is generated in accordance with the partial signature, and the joint signature identity authentication is performed with the application service in accordance with the full signature. Steps of applying for, inquiring, verifying and exchanging a public key are omitted, and it is unnecessary to publish and inquire the public key, so it is able to improve the authentication efficiency. In addition, through the collaborative signature authentication and the joint signature authentication, it is able to ensure the key insulation security.

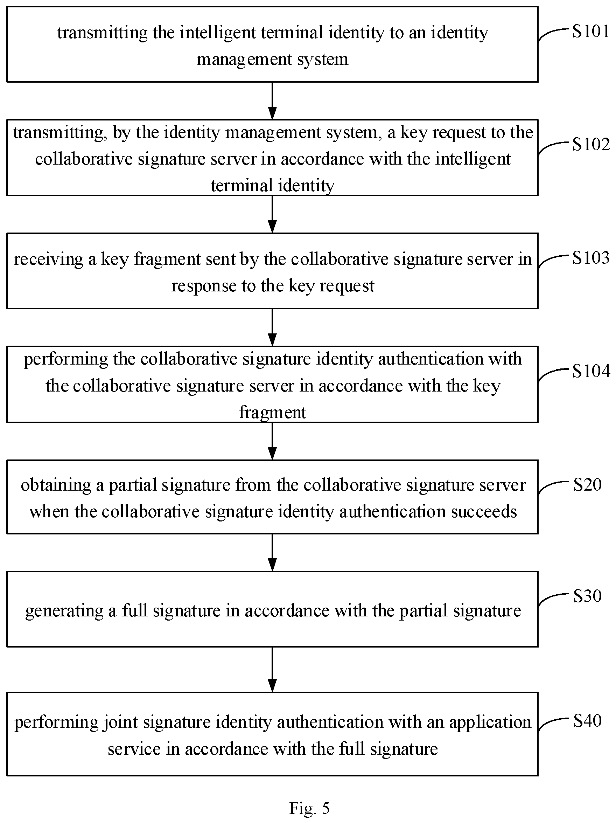

Fig. 5 is a flow chart of an identity authentication method according to a second embodiment of the present disclosure.

Based on the first embodiment, in the identity authentication method according to the second embodiment of the present disclosure, Step S10 specifically includes the following steps S101, S102, S103 and S104.

Step S101: transmitting the intelligent terminal identity to an identity management system.

It should be appreciated that, the collaborative signature identity authentication is performed by the collaborative signature server. During the collaborative signature identity authentication, at first the key fragment needs to be obtained, and then the collaborative signature identity authentication is performed in accordance with the key fragment.

In a specific implementation, there is a correspondence between the intelligent terminal identity and the key fragment. When the intelligent terminal transmits an identity authentication request to the identity management system, the identity management system obtains the intelligent terminal identity of the intelligent terminal. The intelligent terminal identity includes, but not limited to, name, mail address, phone number, identity document number, and Internet Protocol (IP) address.

Step S102: transmitting, by the identity management system, a key request to the collaborative signature server in accordance with the intelligent terminal identity.

In a specific implementation, the identity management system transmits the key request to the collaborative signature server, and the key request includes the intelligent terminal identity.

Step S103: receiving a key fragment sent by the collaborative signature server in response to the key request.

In a specific implementation, upon the receipt of the key request, the collaborative signature server generates the key fragment in accordance with the intelligent terminal identity in the key request, and transmits the generated key fragment to the intelligent terminal.

Step S104: performing the collaborative signature identity authentication with the collaborative signature server in accordance with the key fragment.

In a specific implementation, upon the receipt of the key fragment, the intelligent terminal performs the collaborative signature identity authentication with the collaborative signature server in accordance with the key fragment.

Further, after the intelligent terminal has received the key fragment from the collaborative signature server, the key fragment is loaded to the intelligent terminal, so as to generate the corresponding signature fragment. In addition, in order to prevent the leakage of the key fragment, after the intelligent terminal has received the key fragment and before the key fragment has been loaded, the intelligent terminal performs enhanced protection on the key fragment.

After the generation of the signature fragment, the intelligent terminal requests the collaborative signature server for a collaborative signature, i.e., transmits a collaborative signature request to the collaborative signature server. Upon the receipt of the collaborative signature request, the collaborative signature server performs legitimacy verification on the collaborative signature request, and this procedure is the collaborative signature identity authentication procedure. In this embodiment of the present disclosure, the legitimacy verification may be performed in accordance with a message format or request data of the collaborative signature request, or may be performed in other ways, which will not be particularly limited herein.

Further, when the collaborative signature server determines that the collaborative signature request is valid, the collaborative signature server generates a corresponding collaborative signature in response to the valid collaborative signature request. To be specific, in this embodiment of the present disclosure, the collaborative signature request is forwarded to the identity cipher machine. The identity cipher machine generates the collaborative signature based on the collaborative signature request, and then transmits the collaborative signature to the intelligent terminal through the collaborative signature server. The collaborative signature is the partial signature. When the collaborative signature server determines that the collaborative signature request is invalid, the collaborative signature server updates the error count value, and counts an accumulative value of authentication failures.

Further, after the collaborative signature identity authentication is completed, the joint signature identity authentication is performed, which may be implemented as follows.

In a specific implementation, after generating the full signature in accordance with the partial signature, the intelligent terminal transmits an authentication request to the application service. Upon the receipt of the authentication request, the application service transmits to the intelligent terminal a corresponding challenge code in accordance with a request identity of the authentication request. Upon the receipt of the challenge code, the intelligent terminal performs the joint signature on the challenge code in accordance with a local key fragment to generate the response data, and transmits the response data to the application service. Then, the application service performs legitimacy verification on the response data. The local key fragment is the key fragment sent by the collaborative signature server.

Further, after the response data is transmitted to the application service, the application service performs legitimacy verification on the response data, so as to complete the joint signature identity authentication. In this embodiment of the present disclosure, a data structure or a data value of the response data may be verified, or the legitimacy verification may be performed in other ways, which will not be particularly limited herein.

In the embodiments of the present disclosure, the intelligent terminal identity is transmitted to the identity management system, the key request is transmitted by the identity management system to the collaborative signature server in accordance with the intelligent terminal identity, the key fragment is received from the collaborative signature server in response to the key request, the collaborative signature identity authentication is performed with the collaborative signature server in accordance with the key fragment, the authentication request is transmitted to the application service, the challenge code is received from the application service in response to the authentication request, the response data is generated in accordance with the local key fragment and the challenge code and transmitted to the application service, and the legitimacy verification is performed on the response data through the application service. As a result, the legitimacy verification is performed in accordance with the key fragment and the collaborative signature request, and the legitimacy verification is performed in accordance with the response data, so it is able to improve the accuracy and efficiency of the collaborative signature identity authentication and the joint signature identity authentication.

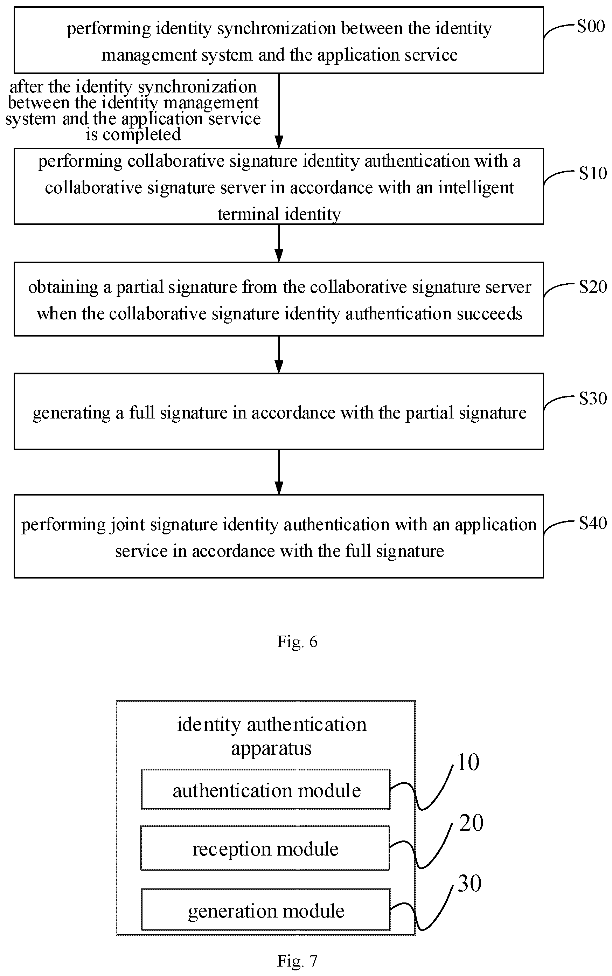

Fig. 6 is a flow chart of the identity authentication method according to a third embodiment of the present disclosure.

Based on the first embodiment or the second embodiment, the present disclosure provides in the third embodiment an identity authentication method.

Based on the first embodiment, in the third embodiment of the present disclosure, prior to Step S10, the identity authentication method further includes a Step S00: performing identity synchronization between the identity management system and the application service.

In a specific implementation, prior to the identity authentication, it is necessary to ensure the synchronization between the intelligent terminal identity in the application service and the intelligent terminal identity in the identity management system.

Further, in this embodiment of the present disclosure, a master key, system parameters and an identity key component may be generated by the identity cipher machine, and then the identity synchronization between the identity management system and the application service is carried out through a preset algorithm in accordance with the master key, the system parameters and the identity key component. The preset algorithm includes at least one of a key generation algorithm, a signature algorithm or a verification algorithm. System parameter generation algorithm is used to output the system parameters and the master key in accordance with a security parameter k. The system parameters are public. The master key is generated by a key center of the identity cipher machine, and then encrypted and stored.

In a specific implementation, a private key is returned by the key generation algorithm in accordance with the system parameters, the master key and an identity document (ID) (name, mail address, phone number, identity document number and IP address). The ID is a public key, and a private key ID is used as a private key for decryption. Next, the signature algorithm is used. To be specific, a to-be-signed plaintext, the public system parameter and the private key are inputted to generate a digital signature, and the plaintext M is encrypted with the system parameters and the private key to obtain a ciphertext, i.e., C=Significant(Params,M,PrivateKey,S), where C represents the ciphertext, Params represents the public system parameter, M represents the plaintext, PrivateKey represents the private key, and S represents the digital signature. Finally, the verification algorithm is used. To be specific, the digital signature, the public system parameter and the public key are inputted, and a verification result is outputted. The ciphertext C is decrypted using the system parameters and the user's public key so as to obtain the plaintext M, i.e., M=Verify(Params,C,ID,S), where Params represents the public system parameter, C represents the ciphertext, ID includes name, mail address, phone number, identity document number and IP address, and S represents the digital signature. Through decrypting the plaintext, the application service obtains the ID, i.e., the intelligent terminal identity, so as to ensure the synchronization between the intelligent terminal identity in the identity management system and the intelligent terminal identity in the application service.

In this embodiment of the present disclosure, the master key, the system parameters and the identity key component are generated by the identity cipher machine, and then the identity synchronization is performed between the identity management system and the application system through the preset algorithm in accordance with the master key, the system parameters and the identity key component. Through the synchronization between the intelligent terminal identity in the identity management system and the intelligent terminal identity in the application service, it is able to further improve the accuracy of the identity authentication.

In addition, the present disclosure further provides in some embodiments a storage medium storing therein an identity authentication program. The identity authentication program, when being executed by a processor, implements the above-mentioned identity authentication method.

The storage medium includes all the technical solutions in the above-mentioned embodiments, so it at least has the above-mentioned beneficial effects, which will not be particularly described herein.

Fig. 7 is a block diagram of an identity authentication apparatus.

As shown in Fig. 7, the identity authentication apparatus includes: an authentication module 10, configured to perform collaborative signature identity authentication with a collaborative signature server in accordance with an intelligent terminal identity; a reception module 20, configured to obtain a partial signature from the collaborative signature server when the collaborative signature identity authentication succeeds; and a generation module 30, configured to generate a full signature in accordance with the partial signature. The authentication module 10 is further configured to perform joint signature identity authentication with an application service in accordance with the full signature.

According to the embodiments of the present disclosure, the collaborative signature identity authentication is performed with the collaborative signature server in accordance with the intelligent terminal identity, the partial signature is obtained from the collaborative signature server when the collaborative signature identity authentication succeeds, the full signature is generated in accordance with the partial signature, and the joint signature identity authentication is performed with the application service in accordance with the full signature. Steps of applying for, inquiring, verifying and exchanging a public key are omitted, and it is unnecessary to publish and inquire the public key, so it is able to improve the authentication efficiency. In addition, through the collaborative signature authentication and the joint signature authentication, it is able to ensure the key insulation security.

In an embodiment, the authentication module 10 is further configured to: transmit the intelligent terminal identity to an identity management system; transmit, through the identity management system, a key request to the collaborative signature server in accordance with the intelligent terminal identity; receive a key fragment sent by the collaborative signature server in response to the key request; and perform the collaborative signature identity authentication with the collaborative signature server in accordance with the key fragment.

In an embodiment, the authentication module 10 is further configured to: generate a corresponding signature fragment by loading the key fragment; transmit a collaborative signature request to the collaborative signature server in accordance with the signature fragment; and perform, through the collaborative signature server, legitimacy verification on the collaborative signature request.

In an embodiment, the reception module 20 is further configured to: forward, through the collaborative signature server, the collaborative signature request to an identity cipher machine; generate, through the identity cipher machine, the partial signature in accordance with the collaborative signature request; and return, through the collaborative signature server, the partial signature.

In an embodiment, the authentication module 10 is further configured to: transmit an authentication request to the application service; receive a challenge code sent by the application service in response to the authentication request; generate response data in accordance with a local key fragment and the challenge code, and transmit the response data to the application service; and perform legitimacy verification on the response data through the application service.

In an embodiment, the identity authentication apparatus further includes a synchronization module configured to perform identity synchronization between the identity management system and the application service, and the authentication module 10 is further configured to perform collaborative signature identity authentication with the collaborative signature server in accordance with the intelligent terminal identity after the identity synchronization between the identity management system and the application service is completed.

In an embodiment, the synchronization module is further configured to: generate, through the identity cipher machine, a master key, system parameters and an identity key component; and perform the identity synchronization between the identity management system and the application service through a preset algorithm in accordance with the master key, the system parameters and the identity key component.

It should be appreciated that, the above embodiments are for illustrative purposes only, but shall not be construed as limiting the scope of the present disclosure. In actual use, a person skilled in the art may make modifications according to the practical need, which will not be particularly limited herein.

It should be further appreciated that, the above working procedure is for illustrative purposes only, but shall not be construed as limiting the scope of the present disclosure. In actual use, a person skilled in the art may select a part of, or all of, the working procedure according to the practical need to achieve the object of the present disclosure, which will not be particularly limited herein.

In addition, for details not described in this embodiment of the present disclosure, reference may be made to those in the above-mentioned identity authentication method, which will not be particularly described herein.

It should be further appreciated that, such terms as "include" or "including" or any other variations involved in the present disclosure intend to encompass a non-exclusive inclusion, so that a procedure, method, article or system including a series of elements may also include other elements not listed explicitly, or may include any elements inherent to the procedure, method, article or system. If without any further limitations, for the elements defined by such sentence as "including one ...", it is not excluded that the procedure, method, article or system including the elements may also include other identical elements.

The serial numbers of the embodiments are for illustrative purposes only, and are not intended to define a preference among the embodiments.

From the foregoing description of the embodiments, a person skilled in the art will appreciate clearly that the method according to the embodiments may be implemented not only by software in conjunction with necessary generic hardware platform, but also by hardware, although the former will be preferred in most cases. Based on such an understanding, essential parts, or parts contributing to the related art, of the technical solution of the present disclosure may be implemented in a form of a software product. The software product is stored in a storage medium (e.g., a read only memory (ROM)/ random access memory (RAM), a magnetic disk and an optical disc) and includes several instructions adapted to be executed by a terminal device (such as a handset, a computer, a server or a network device) to perform the method according to the embodiments of the present disclosure.

The above descriptions merely describe optional embodiments of the present disclosure. The scope of the present disclosure is not limited thereto. Any equivalent modification or replacements in structure or process made on a basis of the description and the drawings of the present disclosure, or direct or indirect application thereof in other related technical fields, shall fall within the scope of the present disclosure.

## Claims

1. An identity authentication method, comprising
performing (S10) collaborative signature identity authentication with a collaborative signature server in accordance with an intelligent terminal identity;
obtaining (S20) a partial signature from the collaborative signature server when the collaborative signature identity authentication succeeds;
generating (S30) a full signature in accordance with the partial signature; and performing (S40) joint signature identity authentication with an application service in accordance with the full signature;
wherein the performing the collaborative signature identity authentication with the collaborative signature server in accordance with the intelligent terminal identity comprises:
transmitting (S101) the intelligent terminal identity to an identity management system;
transmitting (S102), by the identity management system, a key request to the collaborative signature server in accordance with the intelligent terminal identity;
receiving (S103) a key fragment sent by the collaborative signature server in response to the key request; and
performing (S104) the collaborative signature identity authentication with the collaborative signature server in accordance with the key fragment.

2. The identity authentication method according to claim 1, wherein the performing the collaborative signature identity authentication with the collaborative signature server in accordance with the key fragment comprises:
generating a signature fragment corresponding to the key fragment by loading the key fragment;
transmitting a collaborative signature request to the collaborative signature server in accordance with the signature fragment; and
performing, by the collaborative signature server, legitimacy verification on the collaborative signature request.

3. The identity authentication method according to claim 2, wherein the obtaining the partial signature from the collaborative signature server when the collaborative signature identity authentication succeeds comprises:
forwarding, by the collaborative signature server, the collaborative signature request to an identity cipher machine;
generating, by the identity cipher machine, the partial signature in accordance with the collaborative signature request; and
returning, by the collaborative signature server, the partial signature.

4. The identity authentication method according to claim 1, wherein the performing the joint signature identity authentication with the application service in accordance with the full signature comprises:
transmitting an authentication request to the application service;
receiving a challenge code sent by the application service in response to the authentication request;
generating response data in accordance with a local key fragment and the challenge code, and transmitting the response data to the application service; and
performing, by the application service, legitimacy verification on the response data.

5. The identity authentication method according to any one of claims 1 to 4, wherein prior to performing the collaborative signature identity authentication with the collaborative signature server in accordance with the intelligent terminal identity, the identity authentication method further comprises:
performing identity synchronization between the identity management system and the application service, wherein the collaborative signature identity authentication with the collaborative signature server in accordance with the intelligent terminal identity is performed after the identity synchronization between the identity management system and the application service is completed.

6. The identity authentication method according to claim 5, wherein the performing the identity synchronization between the identity management system and the application service comprises:
generating, by the identity cipher machine, a master key, system parameters and an identity key component; and
performing the identity synchronization between the identity management system and the application service through a preset algorithm in accordance with the master key, the system parameters and the identity key component.

7. An identity authentication device, comprising a memory (1005), a processor (1001), and an identity authentication program stored in the memory and executed by the processor, wherein the identity authentication program is configured to implement the identity authentication method according to any one of claims 1 to 6.

8. A storage medium storing therein an identity authentication program, wherein the identity authentication program, when being executed by a processor, implements the identity authentication method according to any one of claims 1 to 6.

## Patentansprüche

1. Identitätsauthentifizierungsverfahren, umfassend:
Durchführen (S10) einer Gemeinschaftssignatur-Identitätsauthentifizierung mit einem Gemeinschaftssignatur-Server gemäß einer Identität eines intelligenten Endgeräts;
Erhalten (S20) einer Teilsignatur von dem Gemeinschaftssignatur-Server, wenn die Gemeinschaftssignatur-Identitätsauthentifizierung erfolgreich ist;
Erzeugen (S30) einer vollständigen Signatur gemäß der Teilsignatur; und
Durchführen (S40) einer Identitätsauthentifizierung mittels gemeinsamer Signatur mit einem Anwendungsdienst gemäß der vollständigen Signatur;
wobei das Durchführen der Gemeinschaftssignatur-Identitätsauthentifizierung mit dem Gemeinschaftssignatur-Server gemäß der Identität des intelligenten Endgeräts Folgendes umfasst:
Übermitteln (S101) der Identität des intelligenten Endgeräts an ein Identitätsverwaltungssystem;
Übermitteln (S102) einer Schlüsselanforderung an den Gemeinschaftssignatur-Server durch das Identitätsverwaltungssystem gemäß der Identität des intelligenten Endgeräts;
Empfangen (S103) eines Schlüsselfragments, das als Antwort auf die Schlüsselanforderung durch den Gemeinschaftssignatur-Server gesendet wird; und
Durchführen (S104) der Gemeinschaftssignatur-Identitätsauthentifizierung mit dem Gemeinschaftssignatur-Server gemäß dem Schlüsselfragment.

2. Identitätsauthentifizierungsverfahren nach Anspruch 1, wobei das Durchführen der Gemeinschaftssignatur-Identitätsauthentifizierung mit dem Gemeinschaftssignatur-Server gemäß dem Schlüsselfragment Folgendes umfasst:
Erzeugen eines dem Schlüsselfragment entsprechenden Signaturfragments durch Laden des Schlüsselfragments;
Übermitteln einer Gemeinschaftssignatur-Anfrage an den Gemeinschaftssignatur-Server gemäß dem Signaturfragment; und
Durchführen einer Legitimitätsprüfung der Gemeinschaftssignatur-Anfrage durch den Gemeinschaftssignatur-Server.

3. Identitätsauthentifizierungsverfahren nach Anspruch 2, wobei das Erhalten der Teilsignatur von dem Gemeinschaftssignatur-Server, wenn die Gemeinschaftssignatur-Identitätsauthentifizierung erfolgreich ist, Folgendes umfasst:
Weiterleiten der Gemeinschaftssignatur-Anfrage an eine Identitätsverschlüsselungsmaschine durch den Gemeinschaftssignatur-Server;
Erzeugen der Teilsignatur durch die Identitätsverschlüsselungsmaschine gemäß der Gemeinschaftssignatur-Anfrage; und
Zurücksenden der Teilsignatur durch den Gemeinschaftssignatur-Server.

4. Identitätsauthentifizierungsverfahren nach Anspruch 1, wobei das Durchführen der Identitätsauthentifizierung mittels gemeinsamer Signatur mit dem Anwendungsdienst gemäß der vollständigen Signatur Folgendes umfasst:
Übermitteln einer Authentifizierungsanfrage an den Anwendungsdienst;
Empfangen eines Herausforderungscodes, der als Antwort auf die Authentifizierungsanfrage durch den Anwendungsdienst gesendet wird;
Erzeugen von Antwortdaten gemäß einem lokalen Schlüsselfragment und dem Herausforderungscode und Übermitteln der Antwortdaten an den Anwendungsdienst; und
Durchführen einer Legitimitätsprüfung der Antwortdaten durch den Anwendungsdienst.

5. Identitätsauthentifizierungsverfahren nach einem der Ansprüche 1 bis 4, wobei das Identitätsauthentifizierungsverfahren vor dem Durchführen der Gemeinschaftssignatur-Identitätsauthentifizierung mit dem Gemeinschaftssignatur-Server gemäß der Identität des intelligenten Endgeräts ferner Folgendes umfasst:
Durchführen einer Identitätssynchronisierung zwischen dem Identitätsverwaltungssystem und dem Anwendungsdienst, wobei die Gemeinschaftssignatur-Identitätsauthentifizierung mit dem Gemeinschaftssignatur-Server gemäß der Identität des intelligenten Endgeräts durchgeführt wird, nachdem die Identitätssynchronisierung zwischen dem Identitätsverwaltungssystem und dem Anwendungsdienst abgeschlossen ist.

6. Identitätsauthentifizierungsverfahren nach Anspruch 5, wobei das Durchführen der Identitätssynchronisation zwischen dem Identitätsverwaltungssystem und dem Anwendungsdienst Folgendes umfasst:
Erzeugen eines Hauptschlüssels, von Systemparametern und einer Identitätsschlüsselkomponente durch die Identitätsverschlüsselungsmaschine; und
Durchführen der Identitätssynchronisation zwischen dem Identitätsverwaltungssystem und dem Anwendungsdienst anhand eines voreingestellten Algorithmus gemäß dem Hauptschlüssel, den Systemparametern und der Identitätsschlüsselkomponente.

7. Identitätsauthentifizierungsvorrichtung, umfassend einen Speicher (1005), einen Prozessor (1001) und ein Identitätsauthentifizierungsprogramm, das in dem Speicher gespeichert ist und durch den Prozessor ausgeführt wird, wobei das Identitätsauthentifizierungsprogramm dazu konfiguriert ist, das Identitätsauthentifizierungsverfahren nach einem der Ansprüche 1 bis 6 zu implementieren.

8. Speichermedium, auf dem ein Identitätsauthentifizierungsprogramm gespeichert ist, wobei das Identitätsauthentifizierungsprogramm, wenn es durch einen Prozessor ausgeführt wird, das Identitätsauthentifizierungsverfahren nach einem der Ansprüche 1 bis 6 implementiert.

## Revendications

1. Procédé d'authentification d'identité, comprenant :
la réalisation (S10) d'une authentification d'identité de signature collaborative avec un serveur de signature collaborative conformément à une identité de terminal intelligent ;
l'obtention (S20) d'une signature partielle à partir du serveur de signature collaborative lorsque l'authentification d'identité de signature collaborative réussit ;
la génération (S30) d'une signature complète conformément à la signature partielle ; et
la réalisation (S40) d'une authentification d'identité de signature conjointe avec un service d'application conformément à la signature complète ;
dans lequel la réalisation de l'authentification d'identité de signature collaborative avec le serveur de signature collaborative conformément à l'identité de terminal intelligent comprend :
la transmission (S101) de l'identité de terminal intelligent à un système de gestion d'identité ;
la transmission (S102), par le système de gestion d'identité, d'une demande de clé au serveur de signature collaborative conformément à l'identité de terminal intelligent ;
la réception (S103) d'un fragment de clé envoyé par le serveur de signature collaborative en réponse à la demande de clé ; et
la réalisation (S104) de l'authentification d'identité de signature collaborative avec le serveur de signature collaborative conformément au fragment de clé.

2. Procédé d'authentification d'identité selon la revendication 1, dans lequel la réalisation de l'authentification d'identité de signature collaborative avec le serveur de signature collaborative conformément au fragment de clé comprend :
la génération d'un fragment de signature correspondant au fragment de clé en chargeant le fragment de clé ;
la transmission d'une demande de signature collaborative au serveur de signature collaborative conformément au fragment de signature ; et
la réalisation, par le serveur de signature collaborative, d'une vérification de légitimité sur la demande de signature collaborative.

3. Procédé d'authentification d'identité selon la revendication 2, dans lequel l'obtention de la signature partielle à partir du serveur de signature collaborative, lorsque l'authentification d'identité de signature collaborative réussit, comprend :
le transfert, par le serveur de signature collaborative, de la demande de signature collaborative à une machine de chiffrement d'identité ;
la génération, par la machine de chiffrement d'identité, de la signature partielle conformément à la demande de signature collaborative ; et
le renvoi, par le serveur de signature collaborative, de la signature partielle.

4. Procédé d'authentification d'identité selon la revendication 1, dans lequel la réalisation de l'authentification d'identité de signature conjointe avec le service d'application conformément à la signature complète comprend :
la transmission d'une demande d'authentification au service d'application ;
la réception d'un code de défi envoyé par le service d'application en réponse à la demande d'authentification ;
la génération de données de réponse conformément à un fragment de clé locale et au code de défi, et la transmission des données de réponse au service d'application ; et
la réalisation, par le service d'application, d'une vérification de légitimité sur les données de réponse.

5. Procédé d'authentification d'identité selon l'une quelconque des revendications 1 à 4, dans lequel avant la réalisation de l'authentification d'identité de signature collaborative avec le serveur de signature collaborative conformément à l'identité de terminal intelligent, le procédé d'authentification d'identité comprend en outre :
la réalisation d'une synchronisation d'identité entre le système de gestion d'identité et le service d'application, dans lequel l'authentification d'identité de signature collaborative avec le serveur de signature collaborative conformément à l'identité de terminal intelligent est réalisée après que la synchronisation d'identité entre le système de gestion d'identité et le service d'application est terminée.

6. Procédé d'authentification d'identité selon la revendication 5, dans lequel la réalisation de la synchronisation d'identité entre le système de gestion d'identité et le service d'application comprend :
la génération, par la machine de chiffrement d'identité, d'une clé maîtresse, de paramètres système et d'un composant de clé d'identité ; et
la réalisation de la synchronisation d'identité entre le système de gestion d'identité et le service d'application à travers un algorithme prédéfini conformément à la clé maîtresse, aux paramètres de système et au composant de clé d'identité.

7. Dispositif d'authentification d'identité, comprenant une mémoire (1005), un processeur (1001) et un programme d'authentification d'identité stocké dans la mémoire et exécuté par le processeur, dans lequel le programme d'authentification d'identité est configuré pour mettre en œuvre le procédé d'authentification d'identité selon l'une quelconque des revendications 1 à 6.

8. Support de stockage stockant en son sein un programme d'authentification d'identité, dans lequel le programme d'authentification d'identité, lorsqu'il est exécuté par un processeur, met en œuvre le procédé d'authentification d'identité selon l'une quelconque des revendications 1 à 6.
